# EUROPÄISCHE PATENTANMELDUNG

(11) **EP 3 791 985 A1**
(43) Veröffentlichungstag der Anmeldung: **17.03.2021**
(21) Anmeldenummer: 19196439.4
(22) Anmeldetag: 10.09.2019
(51) Int. Cl.: B23F 5/16, B23F 21/12, B23F 21/10, B23F 21/04, B23F 21/06

(54) **WÄLZSCHÄLWERKZEUG UND VERFAHREN ZUR SPANENDEN ERZEUGUNG EINER VERZAHNUNG EINES ZAHNRADS DURCH WÄLZSCHÄLEN**

(71) Anmelder: Flender GmbH, 46395 Bocholt (DE)
(72) Erfinder: Schaffeld, Richard, 46419 Isselburg (DE)
(74) Vertreter: Maier, Daniel Oliver

(57) **Zusammenfassung**

Die Erfindung betrifft ein Wälzschälwerkzeug (10) zur spanenden Erzeugung einer Verzahnung eines Zahnrads durch Wälzschälen, mit einem rotierbaren Trägerkörper (12) und mit dem Trägerkörper (12) in einer gemeinsamen Radialebene verbundenen und radial abstehenden Schneiden (14) zur spanenden Bearbeitung eines Werkstücks (24, wobei zumindest ein Teil der Schneiden (14) zueinander ungleichmäßig angeordnet und/oder ausgerichtet sind. Die Erfindung betrifft ferner ein dazu korrespondierendes Verfahren (26). Durch die nicht regelmäßige Verteilung der Schneiden (14) auf dem Trägerkörper (12) kann beim Wälzschälen eine örtlich verteilte Bearbeitung des Umfangs des Werkstücks (24) erfolgen, so dass eine schnelle und kostengünstige Erzeugung einer Verzahnung eines Zahnrads ermöglicht ist.

## Beschreibung

Die Erfindung betrifft ein Wälzschälwerkzeug und ein Verfahren, mit deren jeweiligen Hilfe eine Verzahnung eines Zahnrad durch Wälzschälen spanend erzeugt werden kann.

Bei einer spanenden Erzeugung einer Verzahnung eines Zahnrads durch Wälzschälen wird das im Wesentlichen kreisscheibenförmige Werkstück des späteren Zahnrads an seinem äußeren und/oder inneren Umfang spanend bearbeitet. Hierzu kann ein Wälzschälwerkzeug einer zum Wälzschälen geeigneten Werkzeugmaschine in das Material am Umfang des Werkstücks eindringen und eine Abwälzbewegung ausführen, bei der sowohl das Wälzschälwerkzeug als auch das Werkstück verdreht werden, wodurch ein Span in dem zu erzeugenden Zahnzwischenraum von dem Werkstück abgeschält wird. Das Wälzschälwerkzeug weist hierzu mehrere am Umfang gleichmäßig verteilte radial abstehende Schneiden auf, so dass sich für jeden nachfolgenden zu erzeugenden Zahnzwischenraum im Wesentlichen identische Bedingungen ergeben. Bei der Erzeugung der Verzahnung wird das Werkstück in der Regel mit dem Wälzschälwerkzeug mehrmals einem Schruppen unterzogen, bevor ein finales Schlichten erfolgt.

Es besteht ein ständiges Bedürfnis die Verzahnung eines Zahnrads möglichst schnell und kostengünstig zu erzeugen.

Es ist die Aufgabe der Erfindung Maßnahmen aufzuzeigen, die eine schnelle und kostengünstige Erzeugung einer Verzahnung eines Zahnrads ermöglichen.

Die Lösung der Aufgabe erfolgt durch ein Wälzschälwerkzeug mit den Merkmalen des Anspruchs 1 sowie ein Verfahren mit den Merkmalen des Anspruchs 14. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Ein Aspekt der Erfindung betrifft ein Wälzschälwerkzeug zur spanenden Erzeugung einer Verzahnung eines Zahnrads durch Wälzschälen, mit einem rotierbaren Trägerkörper und mit dem Trägerkörper in einer gemeinsamen Radialebene verbundenen und radial abstehenden Schneiden zur spanenden Bearbeitung eines Werkstücks, wobei zumindest ein Teil der Schneiden, insbesondere innerhalb der gemeinsamen Radialebene, zueinander ungleichmäßig angeordnet und/oder ausgerichtet sind.

Da die, insbesondere als Wendeschneidplatten ausgestalteten, Schneiden des Wälzschälwerkzeugs nicht gleichmäßig und nicht symmetrisch, sondern ungleichmäßig angeordnet und/oder ausgerichtet sind, greifen die verschiedenen Schneiden nicht mit einer zueinander identischen Schnittbewegung zur Ausbildung einer Außenverzahnung und/oder Innenverzahnung in das Material am Umfang des Werkstücks ein. Die Anzahl der Schneiden des Wälzschälwerkzeugs kann hierbei derart an die Zähneanzahl der zu erzeugenden Verzahnung angepasst sein, dass immer wieder andere Schneiden in einen bestimmten Zahnzwischenraum zum Abtragen von Material eingreifen. Dies führt dazu, dass die zueinander verschiedenartig vorgesehenen Schneiden mit einer unterschiedlichen Relativlage zu dem Werkstück in den zu erzeugenden Zahnzwischenraum eingreifen.

Beispielsweise kann die eine Schneide stark in eine Zahnflanke des Zahnzwischenraum eingreifen und an der anderen Zahnflanke beabstandet vorbeigeführt werden, während die andere Schneide stark in die zuvor nicht bearbeitete Zahnflanke eingreift und an der zuvor von der einen Schneide spanend bearbeiteten Zahnflanke beabstandet vorbeigeführt wird. Die Kombination der spanenden Bearbeitungen der ungleichmäßig zueinander angeordneten Schneiden führt zu dem beabsichtigten Bearbeitungsergebnis, ohne dass die ungleichmäßige Anordnung der Schneiden zu einer Beeinträchtigung der Präzision der Formgestaltung des Zahnzwischenraums führt. Da die jeweilige Schneide jedoch nicht an beiden Zahnflanken gleichzeitig angreift, sondern nur an einer Zahnflanke, wird die Schneide auch nur an einer Seite belastet. Die jeweilige Schneide kann dadurch tiefer in das Material des Werkstücks eindringen, ohne dass eine Beschädigung oder sonstiges Bauteilversagen der Schneide zu befürchten wäre. Dadurch kann in einem Bearbeitungsdurchgang insgesamt mehr Material abgespant werden, als dies bei einer identischen Relativlage der jeweiligen Schneiden zu dem Werkstück bei der Bearbeitung des betrachteten Zahnzwischenraums möglich wäre. Gleichzeitig kann über die nicht mit der Abtragung von Material belastetet Seite der Schneide Reibungswärme abgeführt werden, wodurch die thermische Belastung der jeweiligen Schneide sinkt und/oder eine höhere Bearbeitungsgeschwindigkeit mit dem Wälzschälwerkzeug ermöglicht wird.

Das Wälzschälen ist ein vergleichsweise kostengünstiges Bearbeitungsverfahren, das mit einer eher kostengünstigen zum Wälzschälen geeigneten Werkzeugmaschine durchgeführt werden kann. Durch die nicht regelmäßige Verteilung der Schneiden auf dem Trägerkörper kann eine örtlich verteilte Bearbeitung des Umfangs des Werkstücks erfolgen, die eine hohe Zerspanungsleistung ermöglicht, die ansonsten nur durch aufwendigere und kostenintensivere Bearbeitungsverfahren und Werkzeugwerkstoffe realisiert werden dürfte. Beispielsweise kann dadurch eine vorherige Grobbearbeitung durch Wälzfräsen eingespart werden und/oder die Anzahl an Bearbeitungsdurchgängen reduziert werden. Insbesondere ist es möglich Verzahnungen zu fertigen, die ein großes Modul aufweisen und dadurch einen besonders großen Zahnzwischenraum ausbilden, der spanend abgetragen werden muss. Insbesondere kann das Wälzschälwerkzeug zur Herstellung von Zahnrädern mit einem Modul m von m ≥ 4 mm, insbesondere m ≥ 8 mm, vorzugsweise m ≥ 16 mm und besonders bevorzugt m ≥ 20 mm verwendet werden. Durch die nicht regelmäßige Verteilung der Schneiden auf dem Trägerkörper kann beim Wälzschälen eine örtlich verteilte Bearbeitung des Umfangs des Werkstücks erfolgen, so dass eine schnelle und kostengünstige Erzeugung einer Verzahnung eines Zahnrads ermöglicht ist.

Der Trägerkörper kann im Wesentlichen als eine von einer Antriebsspindel rotierbare Scheibe ausgestaltet sein. An dem radial äußeren Umfang des Trägerkörper und/oder an mindestens einer Axialseite des Trägerkörpers können die insbesondere als Wendeschneidplatten ausgestalteten Schneiden, vorzugsweise lösbar, befestigt sein. Die Schneiden sind hierbei in einer gemeinsamen Radialebene vorgesehen, wobei es hierbei grundsätzlich möglich ist, dass zwei oder mehr Sätze an Schneiden vorgesehen sind, wobei jeder Satz Schneiden auf einer anderen Radialebene vorgesehen ist. Die Schneiden können insbesondere in Umfangsrichtung hintereinander vorgesehen sein, wobei einzelne oder sogar alle Schneiden zumindest geringfügig anders positioniert sind. Die Schneiden können hierbei beispielsweise bezüglich ihrer Position in Umfangsrichtung, ihrer Position in tangentialer Richtung, ihrer Relativwinkellage zu einer Radialrichtung und/oder ihrer radialen Position leicht unterschiedlich vorgesehen sein. Die Schneiden können hierbei jeweils identisch und dadurch austauschbar geformt sein, wobei es prinzipiell auch möglich ist, dass die unterschiedlichen Schnittbewegungen in dem Material am Umfang des Werkstücks durch eine leicht unterschiedliche Formgestaltung der Schneiden erreicht ist.

Insbesondere sind zumindest ein Teil der Schneiden in Umfangsrichtung zueinander unregelmäßig verteilt, wobei insbesondere zwischen jeweils zwei Paaren von einander in Umfangsrichtung nachfolgenden Schneiden unterschiedlich große Umfangswinkel zwischen den Schwerpunkten der Schneiden des jeweiligen Paars ausgebildet sind. Wenn die zueinander in Umfangsrichtung versetzten Schneiden in den selben Zahnzwischenraum spanend eingreifen, kann die eine Schneide den linken Rand des Zahnzwischenraums abschälen, während die andere Schneide den rechten Rand des Zahnzwischenraums abschält. Dadurch kann dieser Zahnzwischenraum, insbesondere alternierend, an seinen tangentialen Seiten bearbeitet werden, wobei die Kombination des Materialabtrags der Schneiden zu einem entsprechend größeren Materialabtrag als bei identisch hintereinander eingreifenden Schneiden führt. Dadurch kann eine hohe Zerspanungsleistung erreicht werden. Insbesondere ist es möglich identisch ausgeformte Schneiden, vorzugsweise Wendeschneidplatten, zu verwenden und lediglich die Relativlage der Schneiden in Umfangsrichtung zueinander unterschiedlich vorzusehen.

Vorzugsweise ist zwischen zwei einander nachfolgenden Schneiden in Umfangsrichtung ein Winkelabstand α₁ und zwischen einer der Schneiden und einer in einer von der anderen Schneide weg weisenden Umfangsrichtung nachfolgenden weiteren Schneide ein Winkelabstand α₂ ausgebildet, wobei mit Δα = |(α₁-α₂)|/2 0,0° < Δα ≤ 5,0°, insbesondere 0,15° ≤ Δα ≤ 3,0°, vorzugsweise 0,25° ≤ Δα ≤ 1,5° und besonders bevorzugt 0,35° ≤ Δα ≤ 0,8° gilt. In Umfangsrichtung kann zwischen nachfolgenden Schneiden der Winkelabstand α₁ und unmittelbar danach der Winkelabstand α₂ vorgesehen sein. Vorzugsweise sind der Winkelabstand α₁ und auch der Winkelabstand α₂ alternierend vorgesehen. Bei einem derartig bemessenen Winkelabstand beziehungsweise einem derartig bemessenen Unterschied im Winkelabstand kann eine hinreichend hohe Schnitttiefe in tangentialer Richtung bei einer akzeptablen Bauteilbelastung der jeweiligen Schneide erreicht werden, um mit einer hohen Zerspanungsleistung den Zahnzwischenraum am Umfang des Werkstücks zu fertigen.

Besonders bevorzugt sind für sämtliche in der gemeinsamen Radialebene vorgesehenen Schneiden nur genau ein Δα oder genau zwei verschiedene Δα oder nur genau drei verschiedene Δα oder nur genau vier verschiedene Δα ausgebildet sind. Durch die begrenzte Anzahl an Abweichungen zum Winkelabstand α ergeben sich für mehrere Schneiden des Wälzschälwerkzeugs identische Eingriffsbedingungen für unterschiedliche zu erzeugende Zahnzwischenräume. Dadurch kann eine Schnittabfolge unterschiedlicher Schneiden in dem einen Zahnzwischenraum im Vergleich zu einer anderen Schnittabfolge unterschiedlicher Schneiden in einem bei der Abwälzbewegung des Wälzschälwerkzeug an dem Werkstück nachfolgenden Zahnzwischenraum zu einem im Wesentlichen identischen Fertigungsergebnis führen.

Insbesondere ist zumindest eine der Schneiden zu einer Radialrichtung des Trägerkörpers in tangentialer Richtung parallel versetzt angeordnet. Die Schneiden eines herkömmlichen Wälzschälwerkzeugs können grundsätzlich entlang der Radialrichtung des Trägerkörpers radial ausgerichtet sein. Bei dem erfindungsgemäßen Wälzschälwerkzeug kann mindestens eine Schneide, vorzugsweise alle Schneiden, parallel zu dieser Radialrichtung etwas versetzt mit dem Trägerkörper verbunden sein, wobei vorzugsweise die eine Schneide in die eine Tangentialrichtung zur Radialrichtung versetzt und die eine andere Schneide, insbesondere um den selben Betrag, in die andere Tangentialrichtung versetzt zur Radialrichtung positioniert ist. Wenn die zu der Radialrichtung versetzten Schneiden in den selben Zahnzwischenraum spanend eingreifen, kann die eine Schneide den linken Rand des Zahnzwischenraums abschälen, während die andere Schneide den rechten Rand des Zahnzwischenraums abschält. Dadurch kann dieser Zahnzwischenraum, insbesondere alternierend, an seinen tangentialen Seiten bearbeitet werden, wobei die Kombination des Materialabtrags der Schneiden zu einem entsprechend größeren Materialabtrag als bei identisch hintereinander eingreifenden Schneiden führt. Dadurch kann eine hohe Zerspanungsleistung erreicht werden. Insbesondere ist es möglich identisch ausgeformte Schneiden, vorzugsweise Wendeschneidplatten, zu verwenden und lediglich den seitlichen Abstand in tangentialer Richtung einer durch den Schwerpunkt der Schneide verlaufenden Mittellinie der Schneide parallel zur Radialrichtung des Trägerkörpers unterschiedlich zu versetzten.

Vorzugsweise gilt für einen tangentialen Abstand x zwischen dem Schwerpunkt der Schneide und der einer Ausrichtung der Schneide entsprechenden Radialrichtung des Trägerkörpers bei einer Breite b der Schneide 0,0 < x/b ≤ 1,0, insbesondere 0,05 ≤ x/b ≤ 0,75, vorzugsweise 0,10 ≤ x/b ≤ 0,50 und besonders bevorzugt 0,15 ≤ x/b ≤ 0,30. Die Breite b der Schneide kann insbesondere durch die maximale Breite der Schneide senkrecht zur durch den Schwerpunkt verlaufenden Mittellinie, die insbesondere auch die mindestens eine radial abstehende Spitze der Schneide schneidet, definiert sein. In Umfangsrichtung kann zwischen nachfolgenden Schneiden der tangentiale Abstand zur parallel zur Mittellinie der Schneide verlaufenden Radialrichtung x und unmittelbar danach der tangentiale Abstand zur parallel zur Mittellinie der nachfolgenden Schneide verlaufenden Radialrichtung -x vorgesehen sein. Vorzugsweise sind die Versatze x und -x alternierend vorgesehen. Bei einem derartig bemessenen Versatz kann eine hinreichend hohe Schnitttiefe in tangentialer Richtung bei einer akzeptablen Bauteilbelastung der jeweiligen Schneide erreicht werden, um mit einer hohen Zerspanungsleistung den Zahnzwischenraum am Umfang des Werkstücks zu fertigen.

Besonders bevorzugt sind für sämtliche in der gemeinsamen Radialebene vorgesehenen Schneiden nur genau ein x/b oder genau zwei verschiedene x/b oder nur genau drei verschiedene x/b oder nur genau vier verschiedene x/b ausgebildet. Durch die begrenzte Anzahl an Versatzen der Mittellinie der Schneide zur Radialrichtung ergeben sich für mehrere Schneiden des Wälzschälwerkzeugs identische Eingriffsbedingungen für unterschiedliche zu erzeugende Zahnzwischenräume. Dadurch kann eine Schnittabfolge unterschiedlicher Schneiden in dem einen Zahnzwischenraum im Vergleich zu einer anderen Schnittabfolge unterschiedlicher Schneiden in einem bei der Abwälzbewegung des Wälzschälwerkzeug an dem Werkstück nachfolgenden Zahnzwischenraum zu einem im Wesentlichen identischen Fertigungsergebnis führen.

Insbesondere ist mindestens eine Schneide zu einer Radialrichtung des Trägerkörpers angeschrägt ausgerichtet. Die Schneiden eines herkömmlichen Wälzschälwerkzeugs können grundsätzlich entlang der Radialrichtung des Trägerkörpers radial ausgerichtet sein. Bei dem erfindungsgemäßen Wälzschälwerkzeug kann mindestens eine Schneide, vorzugsweise alle Schneiden, zu dieser Radialrichtung etwas verdreht beziehungsweise angeschrägt mit dem Trägerkörper verbunden sein, wobei vorzugsweise die eine Schneide in die eine Richtung zur Radialrichtung verdreht und die eine andere Schneide, insbesondere um den selben Winkelbetrag, in die andere Richtung um ihren Schwerpunkt verdreht zur Radialrichtung ausgerichtet ist. Wenn die zueinander gegen die Radialrichtung angeschrägt ausgerichteten Schneiden in den selben Zahnzwischenraum spanend eingreifen, kann die eine Schneide den linken Rand des Zahnzwischenraums abschälen, während die andere Schneide den rechten Rand des Zahnzwischenraums abschält. Dadurch kann dieser Zahnzwischenraum, insbesondere alternierend, an seinen tangentialen Seiten bearbeitet werden, wobei die Kombination des Materialabtrags der Schneiden zu einem entsprechend größeren Materialabtrag als bei identisch hintereinander eingreifenden Schneiden führt. Dadurch kann eine hohe Zerspanungsleistung erreicht werden. Insbesondere ist es möglich identisch ausgeformte Schneiden, vorzugsweise Wendeschneidplatten, zu verwenden und lediglich die Relativwinkellage einer durch den Schwerpunkt der Schneide verlaufenden Mittellinie der Schneide zur Radialrichtung des Trägerkörpers unterschiedlich vorzusehen.

Vorzugsweise gilt für einen Drehwinkel ϕ zwischen einer Ausrichtung der Schneide und der Radialrichtung des Trägerkörpers 0,0 < ϕ ≤ 5,0°, insbesondere 0,05 ≤ ϕ ≤ 3,0°, vorzugsweise 0,20 ≤ ϕ ≤ 2,0° und besonders bevorzugt 0,50 ≤ ϕ ≤ 1,0°. In Umfangsrichtung kann zwischen nachfolgenden Schneiden der Drehwinkel im Schwerpunkt der Schneide zu Radialrichtung ϕ und unmittelbar danach der Drehwinkel im Schwerpunkt der Schneide zu Radialrichtung -ϕ vorgesehen sein. Vorzugsweise sind die Drehwinkel ϕ und -ϕ alternierend vorgesehen. Bei einem derartig bemessenen Drehwinkel kann eine hinreichend hohe Schnitttiefe in tangentialer Richtung bei einer akzeptablen Bauteilbelastung der jeweiligen Schneide erreicht werden, um mit einer hohen Zerspanungsleistung den Zahnzwischenraum am Umfang des Werkstücks zu fertigen. Bei einem entsprechend hohen Drehwinkel ϕ ist es sogar grundsätzlich möglich, dass die eine Schneide an der einen Tangentialseite den Zahnzwischenraum im Bereich des Kopfes des einen Zahns und an der anderen Tangentialseite den Zahnzwischenraum im Bereich des Fußes des anderen Zahns spanend bearbeitet.

Besonders bevorzugt sind für sämtliche in der gemeinsamen Radialebene vorgesehenen Schneiden nur genau ein ϕ oder genau zwei verschiedene ϕ oder nur genau drei verschiedene ϕ oder nur genau vier verschiedene ϕ ausgebildet. Durch die begrenzte Anzahl an Drehwinkeln um den Schwerpunkt der Schneide zur Radialrichtung ergeben sich für mehrere Schneiden des Wälzschälwerkzeugs identische Eingriffsbedingungen für unterschiedliche zu erzeugende Zahnzwischenräume. Dadurch kann eine Schnittabfolge unterschiedlicher Schneiden in dem einen Zahnzwischenraum im Vergleich zu einer anderen Schnittabfolge unterschiedlicher Schneiden in einem bei der Abwälzbewegung des Wälzschälwerkzeug an dem Werkstück nachfolgenden Zahnzwischenraum zu einem im Wesentlichen identischen Fertigungsergebnis führen.

Insbesondere ist ein radial nach außen weisendes Schneidende mindestens einer Schneide auf einem anderen Kopfkreisradius als das nach außen weisende Schneidende einer anderen Schneide angeordnet. Dadurch kann die eine Schneide mit dem Schneidende auf dem großen Kopfkreisradius in radialer Richtung tiefer in den Zahnzwischenraum des Werkstücks einschneiden als eine andere Schneide mit dem Schneidende auf dem kleinen Kopfkreisradius. Die eine Schneide kann dadurch im Fußbereich der Zähne den Zahnzwischenraum fertigen, während die andere Schneide im Kopfbereich den Zahnzwischenraum fertigt. Vorzugsweise weist die Schneide mit dem größeren Kopfkreisradius einen schmaleren Aufbau mit einer geringeren Breite als die Schneide mit dem kleineren Kopfkreisradius auf, damit die Schneide mit dem größeren Kopfkreisradius nicht zusätzlich maßgeblich im Kopfbereich der Zähne Material aus dem zu erzeugenden Zahnzwischenraum abträgt. Dadurch kann dieser Zahnzwischenraum, insbesondere alternierend, an seinen radialen Teilbereichen bearbeitet werden, wobei die Kombination des Materialabtrags der Schneiden zu einem entsprechend größeren Materialabtrag als bei identisch hintereinander eingreifenden Schneiden führt. Dadurch kann eine hohe Zerspanungsleistung erreicht werden.

Vorzugsweise gilt bei einem Nennradius R des Trägerkörpers für einen äußeren Kopfkreisradius Rₐ der einen Schneide und einen inneren Kopfkreisradius Rᵢ der anderen Schneide mit ΔR = (Rₐ-Rᵢ)/2 0,00 < ΔR/R ≤ 0,05, insbesondere 0,001 ≤ ΔR/R ≤ 0,003, vorzugsweise 0,005 ≤ ΔR/R ≤ 0,02 und besonders bevorzugt 0,008 ≤ ΔR/R ≤ 0,01. Wenn der Trägerkörper als im Wesentlichen kreisförmige Scheibe ausgestaltet ist, kann der Nennradius R des Trägerkörpers durch seinen Außenradius definiert sein. Wenn ein Außenradius des Trägerkörpers nicht festgestellt werden kann, kann der Nennradius R durch denjenigen Radius zu einer Drehachse des Trägerkörpers definiert sein, auf dem, gegebenenfalls gemittelt, die Schwerpunkte der Schneiden angeordnet sind. In Umfangsrichtung kann zwischen nachfolgenden Schneiden bei der einen Schneide der Kopfkreisradius Rₐ und bei der nachfolgenden Schneide der Kopfkreisradius Rᵢ vorgesehen sein. Vorzugsweise sind der Kopfkreisradius Rₐ und der Kopfkreisradius Rᵢ alternierend vorgesehen. Bei einem derartig bemessenen Kopfkreisradius kann eine hinreichend hohe Schnitttiefe in radialer und tangentialer Richtung bei einer akzeptablen Bauteilbelastung der jeweiligen Schneide erreicht werden, um mit einer hohen Zerspanungsleistung den Zahnzwischenraum am Umfang des Werkstücks zu fertigen.

Besonders bevorzugt sind für sämtliche in der gemeinsamen Radialebene vorgesehenen Schneiden nur genau ein ΔR/R oder genau zwei verschiedene ΔR/R oder nur genau drei verschiedene ϕ oder nur genau vier verschiedene ΔR/R ausgebildet. Durch die begrenzte Anzahl an Kopfkreisradien der Schneiden ergeben sich für mehrere Schneiden des Wälzschälwerkzeugs identische Eingriffsbedingungen für unterschiedliche zu erzeugende Zahnzwischenräume. Dadurch kann eine Schnittabfolge unterschiedlicher Schneiden in dem einen Zahnzwischenraum im Vergleich zu einer anderen Schnittabfolge unterschiedlicher Schneiden in einem bei der Abwälzbewegung des Wälzschälwerkzeug an dem Werkstück nachfolgenden Zahnzwischenraum zu einem im Wesentlichen identischen Fertigungsergebnis führen.

Ein Aspekt der Erfindung betrifft eine Werkzeugmaschine zur spanenden Erzeugung einer Verzahnung eines Zahnrads durch Wälzschälen, wobei die Werkzeugmaschine ein Wälzschälwerkzeug, das wie vorstehend beschrieben aus- und weitergebildet sein kann, aufweist. Durch die nicht regelmäßige Verteilung der Schneiden auf dem Trägerkörper des Wälzschälwerkzeugs kann beim Wälzschälen eine örtlich verteilte Bearbeitung des Umfangs des Werkstücks erfolgen, so dass eine schnelle und kostengünstige Erzeugung einer Verzahnung eines Zahnrads ermöglicht ist.

Das mit Hilfe der Werkzeugmaschine und/oder dem Wälzschälwerkzeug erzeugte Zahnrad kann insbesondere Teil eines Getriebes, insbesondere Planetengetriebes sein, und/oder Teil einer Steckverzahnung einer Kupplung, beispielsweise zum drehfesten aber axial verschiebbaren Befestigen einer Kupplungsscheibe mit einer Welle. Dieses Getriebe und/oder diese Kupplung kann Teil eines Antriebsstrangs vorzugsweise zur Verwendung in einer Windkraftanlage sein. Der Antriebsstrang kann eine Rotorwelle und einen mit der Rotorwelle verbundenen durch Windkraft antreibbaren Rotor aufweisen, wobei der Rotor und die Rotorwelle über das Getriebe insbesondere mit einer elektrischen Maschine zur Erzeugung elektrischer Energie im Generatormodus gekoppelt sind. Der Antriebsstrang kann Teil einer Windkraftanlage sein, die eine Gondel zur Aufnahme des Antriebsstrangs aufweist, wobei die Gondel insbesondere an einem oberen Ende eines Standturms angebracht sein kann.

Ein Aspekt der Erfindung betrifft eine Industrieapplikation. Hierbei kann für die Industrieapplikation mit Hilfe einer zum Wälzschälen geeigneten Werkzeugmaschine zur spanenden Erzeugung einer Verzahnung eines Zahnrads durch Wälzschälen ein Zahnrad für ein Getriebe, insbesondere Planetengetriebe, und/oder Kupplung gefertigt werden, wobei die Werkzeugmaschine ein Wälzschälwerkzeug, das wie vorstehend beschrieben aus- und weitergebildet sein kann, aufweist. Durch die nicht regelmäßige Verteilung der Schneiden auf dem Trägerkörper des Wälzschälwerkzeugs kann beim Wälzschälen eine örtlich verteilte Bearbeitung des Umfangs des Werkstücks erfolgen, so dass eine schnelle und kostengünstige Erzeugung einer Verzahnung eines Zahnrads ermöglicht ist. Das Getriebe und/oder die Kupplung der Industrieapplikation kann drehmomentübertragend mit einer mechanischen Anwendung gekoppelt sein, in der über das Getriebe eingeleitete mechanische Energie genutzt werden kann. Bei der mechanischen Anwendung handelt es sich beispielsweise um eine Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse, Schrottpresse, Zerkleinerer für recyclingfähige Materialen aus, gegebenenfalls zuvor getrennten und/oder sortierte, Abfällen oder Ähnliches.

Ein weiterer Aspekt der Erfindung betrifft ein Verfahren zum spanenden Erzeugen einer Verzahnung eines Zahnrads durch Wälzschälen, bei dem mit Hilfe eines mehrere Schneiden aufweisenden Wälzschälwerkzeugs, das insbesondere wie vorstehend beschrieben aus- und weitergebildet sein kann, ein Werkstück am Umfang spanend bearbeitet wird, wobei während eines bei einem konstanten Achsabstand des Wälzschälwerkzeugs zum Werkstück durchgeführten Bearbeitungsdurchgang bezogen auf einen nach diesem Bearbeitungsdurchgang vorliegenden Zahnzwischenraum im Umfang des Werkstücks mindestens eine Schneide des Wälzschälwerkzeugs in tangentialer Richtung des Zahnzwischenraums und/oder in radialer Richtung des Zahnzwischenraums nur teilweise Material abträgt. Das Verfahren kann im Übrigen insbesondere wie vorstehend beschrieben aus- und weitergebildet sein.

Das Wälzschälen ist ein vergleichsweise kostengünstiges Bearbeitungsverfahren, das mit einer eher kostengünstigen zum Wälzschälen geeigneten Werkzeugmaschine durchgeführt werden kann. Insbesondere durch die nicht regelmäßige Verteilung der Schneiden auf dem Trägerkörper des Wälzschälwerkzeugs kann eine örtlich verteilte Bearbeitung des Umfangs des Werkstücks erfolgen, die eine hohe Zerspanungsleistung ermöglicht, die ansonsten nur durch aufwendigere und kostenintensivere Bearbeitungsverfahren und Werkzeugwerkstoffe realisiert werden dürfte. Beispielsweise kann dadurch eine vorherige Grobbearbeitung durch Wälzfräsen eingespart werden und/oder die Anzahl an Bearbeitungsdurchgängen reduziert werden. Insbesondere ist es möglich äußere und innere Verzahnungen zu fertigen, die ein großes Modul aufweisen und dadurch einen besonders großen Zahnzwischenraum ausbilden, der spanend abgetragen werden muss. Durch das nicht regelmäßige Abtragen von Material des Werkstücks aus dem Zahnzwischenraum während eines Bearbeitungsdurchgangs kann beim Wälzschälen eine örtlich verteilte Bearbeitung des Umfangs des Werkstücks erfolgen, so dass eine schnelle und kostengünstige Erzeugung einer Verzahnung eines Zahnrads ermöglicht ist.

Zur Herstellung der Verzahnung am äußeren und/oder inneren Umfang des Werkstücks können insbesondere mehrere Bearbeitungsdurchgänge vorgesehen sein, beispielsweise ein oder mehrere Schruppbearbeitungen und ein oder mehrere Schlichtbearbeitungen, wobei für den jeweiligen Bearbeitungsdurchgang der Achsabstand der Drehachsen des Wälzschälwerkzeugs und des Werkstücks mit jedem nachfolgenden Bearbeitungsdurchgang verringert werden kann, um in dem jeweiligen Bearbeitungsdurchgang entsprechend viel Material abtragen zu können. Die örtlich verteilte Bearbeitung des jeweiligen Zahnzwischenraums kann hierbei in jedem Bearbeitungsdurchgang vorgesehen sein.

Insbesondere ist vorgesehen, dass die Schneide in einem Bearbeitungsdurchgang nur an einer Zahnflanke der zwei Zahnflanken des zu erzeugenden Zahnzwischenraums und/oder nur am Zahngrund oder nur beabstandet zum Zahngrund Material aus den zu erzeugenden Zahnzwischenraum abträgt. Beispielsweise kann die eine Schneide stark in eine Zahnflanke des Zahnzwischenraum eingreifen und an der anderen Zahnflanke beabstandet vorbeigeführt werden, während die andere Schneide stark in die zuvor nicht bearbeitete Zahnflanke eingreift und an der zuvor von der einen Schneide spanend bearbeiteten Zahnflanke beabstandet vorbeigeführt wird. Die Kombination der spanenden Bearbeitungen der ungleichmäßig zueinander angeordneten Schneiden führt zu dem beabsichtigten Bearbeitungsergebnis, ohne dass die ungleichmäßige Anordnung der Schneiden zu einer Beeinträchtigung der Präzision der Formgestaltung des Zahnzwischenraums führt. Da die jeweilige Schneide jedoch nicht an beiden Zahnflanken gleichzeitig angreift, sondern nur an einer Zahnflanke, wird die Schneide auch nur an einer Seite belastet. Die jeweilige Schneide kann dadurch tiefer in das Material des Werkstücks eindringen, ohne dass eine Beschädigung oder sonstiges Bauteilversagen der Schneide zu befürchten wäre. Dadurch kann in einem Bearbeitungsdurchgang insgesamt mehr Material abgespant werden, als dies bei einer identischen Relativlage der jeweiligen Schneiden zu dem Werkstück bei der Bearbeitung des betrachteten Zahnzwischenraums möglich wäre. Gleichzeitig kann über die nicht mit der Abtragung von Material belastetet Seite der Schneide Reibungswärme abgeführt werden, wodurch die thermische Belastung der jeweiligen Schneide sinkt und/oder eine höhere Bearbeitungsgeschwindigkeit mit dem Wälzschälwerkzeug ermöglicht wird.

Ein Aspekt der Erfindung betrifft eine Steuereinheit zum Betrieb einer zum Wälzschälen geeigneten Werkzeugmaschine, mit Steuerungsmitteln zur Bewegung eines Wälzschälwerkzeugs, das insbesondere wie vorstehend beschrieben aus- und weitergebildet sein kann, relativ zu einem Werkstück, wobei die Steuerungsmittel eingerichtet sind in der Werkzeugmaschine das Verfahren, das insbesondere wie vorstehend beschrieben aus- und weitergebildet sein kann, durchzuführen, wobei insbesondere die Steuerungsmitteln als Teil eines räumlich verteilten Steuereinheit zueinander beabstandet angeordnet sind. Durch das nicht regelmäßige Abtragen von Material des Werkstücks aus dem Zahnzwischenraum während eines Bearbeitungsdurchgangs mit Hilfe der Steuereinheit kann beim Wälzschälen eine örtlich verteilte Bearbeitung des Umfangs des Werkstücks erfolgen, so dass eine schnelle und kostengünstige Erzeugung einer Verzahnung eines Zahnrads ermöglicht ist. Die Steuereinheit kann als Ganzes in der Werkzeugmaschine vorgesehen sein. Es ist aber auch möglich, dass ein erstes Steuerungsmittel der Steuereinheit die Ansteuerung des Wälzschälwerkzeugs, insbesondere Drehzahl, Achsabstand zum Werkstück, Winkellage relativ zur Winkellage des Werkstücks, betrifft, während ein zweites Steuerungsmittel der Steuereinheit die Ansteuerung des Werkstücks, insbesondere Drehzahl, Achsabstand zum Wälzschälwerkzeug, Winkellage relativ zur Winkellage des Wälzschälwerkzeugs, betrifft und ein drittes Steuerungsmittel die für die Fertigung einer bestimmten Verzahnung erforderlichen Parameter für das erste Steuerungsmittel und das zweite Steuerungsmittel in einem Datenspeicher enthält. Das dritte Steuerungsmittel kann zur Werkzeugmaschine beabstandet positioniert sein und die jeweils benötigten gespeicherten Parameter je nach Bedarf ("on demand") an die erste und zweite Steuereinheit, insbesondere drahtlos, beispielsweise über ein WLAN und/oder eine Internetverbindung, übertragen. Dies ermöglich es ein Vielzahl verschiedener Verzahnungen verschiedener Zahnräder für einen komplexen Fertigungsauftrag mit einer Mehrzahl von zum Wälzschälen geeigneten Werkzeugmaschinen über eine zentrale Organisationseinheit gleichzeitig und zeitoptimiert herstellen, indem beispielsweise die jeweiligen Werkzeugmaschine mit der Organisationseinheit "smart" vernetzt werden.

Ein Aspekt der Erfindung betrifft ein Computerprogrammprodukt mit Programmcode-Mitteln, die auf einem computerlesbaren Datenträger gespeichert sind, um das Verfahren, das wie vorstehend beschrieben aus- und weitergebildet sein kann, durchzuführen, wenn das Computerprogrammprodukt auf einem Computer, insbesondere einer Steuereinheit einer zum Wälzschälen geeigneten Werkzeugmaschine, ausgeführt wird. Durch das nicht regelmäßige Abtragen von Material des Werkstücks aus dem Zahnzwischenraum während eines Bearbeitungsdurchgangs mit Hilfe des Computerprogrammprodukts kann beim Wälzschälen eine örtlich verteilte Bearbeitung des Umfangs des Werkstücks erfolgen, so dass eine schnelle und kostengünstige Erzeugung einer Verzahnung eines Zahnrads ermöglicht ist.

Ein Aspekt der Erfindung betrifft ein Computerprogramm mit kodierten Anweisungen zur Durchführung des Verfahrens, das wie vorstehend beschrieben aus- und weitergebildet sein kann, wenn das Computerprogramm auf einem Computer, insbesondere einer Steuereinheit einer zum Wälzschälen geeigneten Werkzeugmaschine, ausgeführt wird. Durch das nicht regelmäßige Abtragen von Material des Werkstücks aus dem Zahnzwischenraum während eines Bearbeitungsdurchgangs mit Hilfe des Computerprogramms kann beim Wälzschälen eine örtlich verteilte Bearbeitung des Umfangs des Werkstücks erfolgen, so dass eine schnelle und kostengünstige Erzeugung einer Verzahnung eines Zahnrads ermöglicht ist.

Ein Aspekt der Erfindung betrifft eine Signalfolge mit computerlesbaren Anweisungen zur Durchführung des Verfahrens, das wie vorstehend beschrieben aus- und weitergebildet sein kann, wenn die Signalfolge von einem Computer, insbesondere einer Steuereinheit einer zum Wälzschälen geeigneten Werkzeugmaschine, verarbeitet wird. Durch das nicht regelmäßige Abtragen von Material des Werkstücks aus dem Zahnzwischenraum während eines Bearbeitungsdurchgangs mit Hilfe der Signalfolge kann beim Wälzschälen eine örtlich verteilte Bearbeitung des Umfangs des Werkstücks erfolgen, so dass eine schnelle und kostengünstige Erzeugung einer Verzahnung eines Zahnrads ermöglicht ist. Die Signalfolge kann insbesondere über eine Internetverbindung der Werkzeugmaschine zur Verfügung gestellt werden, wobei es möglich ist, dass die Signalfolge in unterschiedliche Datenpakete aufgeteilt ist und erst am Zielort zusammengesetzt wird.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- FIG 1: eine schematische Draufsicht auf eine erste Ausführungsform eines Wälzschälwerkzeugs,
- FIG 2: eine vereinfachte schematische Draufsicht auf eine zweite Ausführungsform eines Wälzschälwerkzeugs,
- FIG 3: eine schematische Draufsicht auf eine dritte Ausführungsform eines Wälzschälwerkzeugs,
- FIG 4: ein schematisches Flussdiagramm für ein Verfahren zum Betrieb einer zum Wälzschälen geeigneten Werkzeugmaschine mit einem Wälzschälwerkzeug aus FIG 1, FIG 2 oder FIG 3 und
- FIG 5: eine schematische Prinzipdarstellung eines Wälzschälsystems zur Durchführung des Verfahrens aus FIG 4.

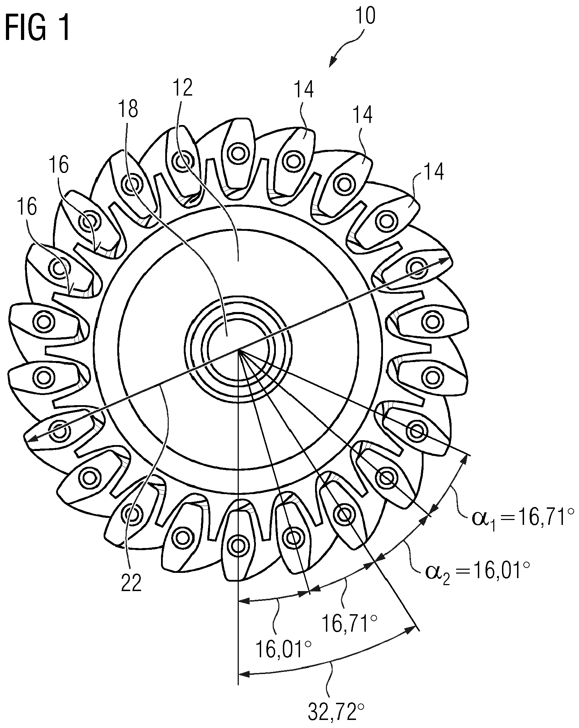

Das in FIG 1 dargestellte Wälzschälwerkzeug 10 weist einen im Wesentlichen kreisscheibenförmigen Trägerkörper 12 auf, auf dessen oberer Axialseite beispielsweise zweiundzwanzig als Wendeschneidplatten ausgestaltete Schneiden 14 angebracht sind. Die Schneiden 14 sind im Wesentlichen rombusförmig ausgestaltet und in ihrem Schwerpunkt lösbar mit dem Trägerkörper 12 verschraubt. Die Schneiden 14 können an beiden spitz zulaufenden Flanken eine Schneidkante ausbilden, wobei es auch möglich ist, dass nur an einer Flanke eine Schneidkante ausgebildet ist. Da die Schneiden 14 als Wendeschneidplatten ausgestaltet sind, sind nicht nur an den nach radial außen weisenden Flanken, sondern auch an den nach radial innen weisenden Flanken eine oder zwei Schneidkanten vorgesehen, so dass die Schneiden nach einem gewissen Verschleiß von dem Trägerkörper 12 gelöst und anderes herum wieder mit dem Trägerkörper 12 verbunden werden können, damit die noch unverschlissenen Schneiden wirksam sind. Der Trägerkörper 12 kann für die Schneiden 14 Aufnahmetaschen 16 ausbilden, in denen die jeweilige Schneide 12 in einer definierten Ausrichtung aufgenommen sein kann. Zudem kann der Trägerkörper 12 eine Nabe 18 aufweisen, um das Wälzschälwerkzeug 10 mit einer Antriebswelle 20 zu verbinden.

Im in FIG 1 dargestellten Ausführungsbeispiel sind in Umfangsrichtung nachfolgende Schneiden 14 in Umfangsrichtung um unterschiedliche Winkelabstände α leicht versetzt positioniert und eben nicht gleichmäßig am Umfang des Trägerkörpers 12 verteilt. Beispielsweise ist zwischen zwei einander nachfolgenden Schneiden 14 ein Winkelabstand α₁ von α₁ = 16,71° und zwischen der unmittelbar nachfolgenden Schneide 14 ein Winkelabstand α₂ von α₂ = 16,01° ausgebildet. Da ausschließlich nur diese Winkelabstände α₁ und α₂ alternierend vorgesehen sind, sind drei nacheinander nachfolgende Schneiden 14 immer auf einem Winkelbereich von 32,72° angeordnet. Die Winkelabstände α sind hierbei zwischen den Schwerpunkten der Schneiden 14 gemessen.

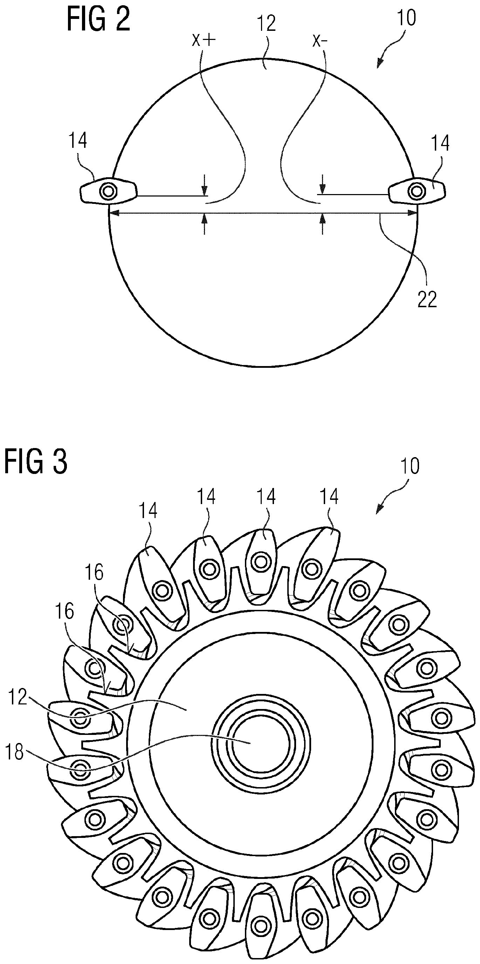

Bei dem in FIG 2 dargestellten Ausführungsbeispiel des Wälzschälwerkzeugs 10 sind im Vergleich zu dem in FIG 1 dargestellten Ausführungsbeispiel des Wälzschälwerkzeugs 10 die Schneiden 14 zusätzlich oder alternativ zu einer Radialrichtung 22 um einen Betrag x parallel versetzt positioniert. Hierbei sind insbesondere die Schneiden 14 alternierend in einer positiven und einer negativen Richtung zur Radialrichtung 22 parallelverschoben angeordnet.

Bei dem in FIG 3 dargestellten Ausführungsbeispiel des Wälzschälwerkzeugs 10 sind im Vergleich zu dem in FIG 2 dargestellten Ausführungsbeispiel des Wälzschälwerkzeugs 10 die nach radial außen weisenden Schneidenden der Schneiden 14 zusätzlich oder alternativ auf unterschiedlichen Kopfkreisradien angeordnet. Dadurch können die einen Schneiden 14 stärker nach radial außen abstehen als andere Schneiden 14. Die Schneiden 14 mit den unterschiedlichen Kopfkreisradien können insbesondere in Umfangsrichtung alternierend angeordnet sein. Zudem ist es möglich, dass die Schneiden 14 mit dem größeren Kopfkreisradius etwas schmäler als die Schneiden 14 mit dem kleineren Kopfkreisradius ausgebildet sind, damit die Schneiden 14 mit dem größeren Kopfkreisradius im Wesentlichen nur im Fußbereich des zu fertigenden Zahnzwischenraums am Umfang eines Werkstücks 24 und die Schneiden 14 mit dem kleineren Kopfkreisradius nur im Kopfbereich des zu fertigenden Zahnzwischenraums am Umfang eines Werkstücks 24 Material abtragen.

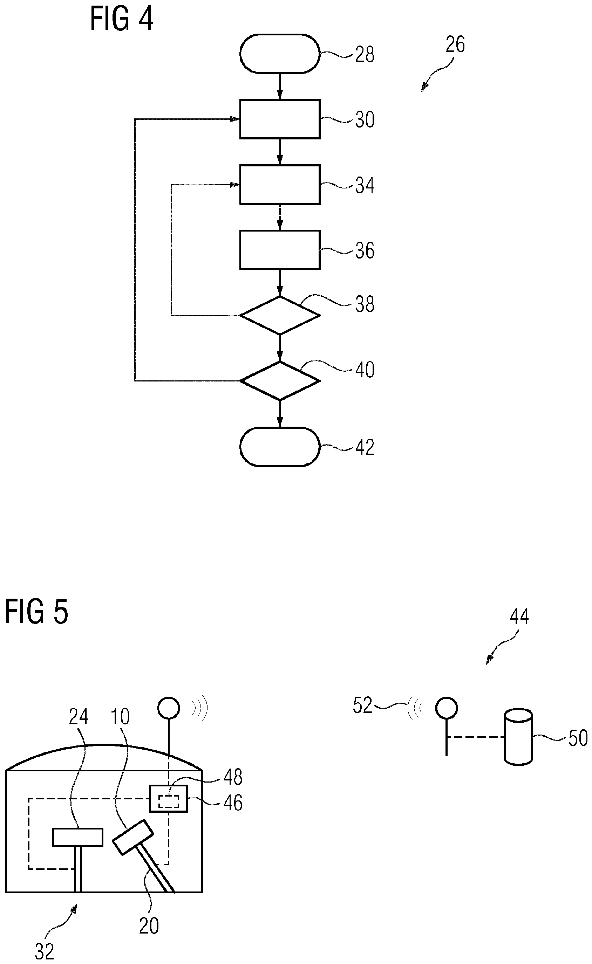

Bei dem in FIG 4 dargestellten Verfahren 26 wird nach einem Start 28 in einem Vorbereitungsschritt 30 die Parameter für den aktuellen Bearbeitungsdurchgang eingelesen, um das Wälzschälwerkzeug 10 und das Werkstück 24 in einer zum Wälzschälen geeigneten Werkzeugmaschine 32 geeignet zueinander bewegen zu können. Hierbei wird in einem ersten Bearbeitungsschritt 34 der zu erzeugende Zahnzwischenraum am Umfang des Werkstücks 24 im Wesentlichen nur an einer Tangentialseite und/oder nur in einem radial inneren oder radial äußeren Bereich spanend bearbeitet. Nach mehreren weiteren Bearbeitungsschritten greift das Wälzschälwerkzeug 10 in diesen Zahnzwischenraum mit einer anderen Schneide 12 ein, welche in einem zweiten Bearbeitungsschritt 36 den zu erzeugende Zahnzwischenraum am Umfang des Werkstücks 24 im Wesentlichen nur an einer Tangentialseite und/oder nur in einem radial inneren oder radial äußeren Bereich spanend bearbeitet, der im ersten Bearbeitungsschritt 34 gerade nicht im signifikanten Ausmaß spanend bearbeitet wurde. Nachfolgend wird ein einem ersten Überprüfungsschritt 38 überprüft, ob der aktuelle Bearbeitungsdurchgang abgeschlossen ist, das heißt sämtliche Zahnzwischenräume am Umfang des Werkstücks 24 über die gesamte axiale Breite mit der für diesen Bearbeitungsdurchgang vorgesehenen Zerspanungsleistung gefertigt wurden. Wenn dies nicht der Fall ist, werden die Bearbeitungsschritte 34, 36 für sämtliche Zahnzwischenräume am Umfang des Werkstücks 24 über die gesamte axiale Breite wiederholt. Wenn der aktuelle Bearbeitungsdurchgang abgeschlossen ist, wird in einem zweiten Überprüfungsschritt 40 überprüft, ob noch mindestens ein weiterer Bearbeitungsdurchgang vorgesehen ist. Wenn dies der Fall ist, werden in dem Vorbereitungsschritt 30 die Parameter für den nächsten Bearbeitungsdurchgang eingelesen und beispielsweise der Achsabstand des Wälzschälwerkzeugs 10 zu dem Werkstück 24 verringert und die Bearbeitung für diesen Bearbeitungsdurchgang durchgeführt. Wenn kein weiterer Bearbeitungsdurchgang vorgesehen ist, erfolgt ein Ende 42 des Verfahrens.

Bei dem in FIG 5 dargestellten Wälzschälsystem 44 kann die Werkzeugmaschine 32 mit Hilfe einer Steuereinheit 46 betrieben werden, die ein Computerprogrammprodukt 48 mit einem Computerprogramm zur Durchführung des Verfahrens 26 auf der Werkzeugmaschine 32 aufweist. Hierbei kann ein Steuermittel der Steuereinheit 46 auch außerhalb der Werkzeugmaschine 32 vorgesehen sein. Beispielsweise kann die Steuereinheit 46 als Steuermittel einen Datenspeicher 50 aufweisen, in dem die Parameter für den Vorbereitungsschritt 30 hinterlegt sind. Diese Parameter können per Internet und/oder drahtlos als Signalfolge 52 an die Werkzeugmaschine 32 übertragen werden.

## Patentansprüche

1. Wälzschälwerkzeug zur spanenden Erzeugung einer Verzahnung eines Zahnrads durch Wälzschälen, mit einem rotierbaren Trägerkörper (12) und mit dem Trägerkörper (12) in einer gemeinsamen Radialebene verbundenen und radial abstehenden Schneiden (14) zur spanenden Bearbeitung eines Werkstücks (24) **dadurch gekennzeichnet, dass** zumindest ein Teil der Schneiden (14) zueinander ungleichmäßig angeordnet und/oder ausgerichtet sind.

2. Wälzschälwerkzeug nach Anspruch 1, **dadurch gekennzeichnet, dass** zumindest ein Teil der Schneiden (14) in Umfangsrichtung zueinander unregelmäßig verteilt sind, wobei insbesondere zwischen jeweils zwei Paaren von einander in Umfangsrichtung nachfolgenden Schneiden (14) unterschiedlich große Umfangswinkel zwischen den Schwerpunkten der Schneiden (14) des jeweiligen Paars ausgebildet sind.

3. Wälzschälwerkzeug nach Anspruch 2, **dadurch gekennzeichnet, dass** zwischen zwei einander nachfolgenden Schneiden (14) in Umfangsrichtung ein Winkelabstand α₁ und zwischen einer der Schneiden (14) und einer in einer von der anderen Schneide (14) weg weisenden Umfangsrichtung nachfolgenden weiteren Schneide (14) ein Winkelabstand α₂ ausgebildet ist, wobei mit Δα = |(α₁-α₂)|/2 0,0° < Δα ≤ 5,0°, insbesondere 0,15° ≤ Δα ≤ 3,0°, vorzugsweise 0,25° ≤ Δα ≤ 1,5° und besonders bevorzugt 0,35° ≤ Δα ≤ 0,8° gilt.

4. Wälzschälwerkzeug nach Anspruch 3, **dadurch gekennzeichnet, dass** für sämtliche in der gemeinsamen Radialebene vorgesehenen Schneiden (14) nur genau ein Δα oder genau zwei verschiedene Δα oder nur genau drei verschiedene Δα oder nur genau vier verschiedene Δα ausgebildet sind.

5. Wälzschälwerkzeug nach einem der Ansprüche 1 bis 4, **dadurch gekennzeichnet, dass** zumindest eine der Schneiden (14) zu einer Radialrichtung (22) des Trägerkörpers (12) in tangentialer Richtung parallel versetzt angeordnet ist.

6. Wälzschälwerkzeug nach Anspruch 5, **dadurch gekennzeichnet, dass** für einen tangentialen Abstand x zwischen dem Schwerpunkt der Schneide (14) und der einer Ausrichtung der Schneide (14) entsprechenden Radialrichtung (22) des Trägerkörpers (12) bei einer Breite b der Schneide (14) 0,0 < x/b ≤ 1,0, insbesondere 0,05 ≤ x/b ≤ 0,75, vorzugsweise 0,10 ≤ x/b ≤ 0,50 und besonders bevorzugt 0,15 ≤ x/b ≤ 0,30 gilt.

7. Wälzschälwerkzeug nach Anspruch 6, **dadurch gekennzeichnet, dass** für sämtliche in der gemeinsamen Radialebene vorgesehenen Schneiden (14) nur genau ein x/b oder genau zwei verschiedene x/b oder nur genau drei verschiedene x/b oder nur genau vier verschiedene x/b ausgebildet sind.

8. Wälzschälwerkzeug nach einem der Ansprüche 1 bis 7, **dadurch gekennzeichnet, dass** mindestens eine Schneide (14) zu einer Radialrichtung (22) des Trägerkörpers (12) angeschrägt ausgerichtet ist.

9. Wälzschälwerkzeug nach Anspruch 8, **dadurch gekennzeichnet, dass** für einen Drehwinkel ϕ zwischen einer Ausrichtung der Schneide (14) und der Radialrichtung (22) des Trägerkörpers (12) 0 < ϕ ≤ 5,0°, insbesondere 0,05 ≤ ϕ ≤ 3,0°, vorzugsweise 0,20 ≤ ϕ ≤ 2,0° und besonders bevorzugt 0,50 ≤ ϕ ≤ 1,0° gilt.

10. Wälzschälwerkzeug nach Anspruch 9, **dadurch gekennzeichnet, dass** für sämtliche in der gemeinsamen Radialebene vorgesehenen Schneiden (14) nur genau ein ϕ oder genau zwei verschiedene ϕ oder nur genau drei verschiedene ϕ oder nur genau vier verschiedene ϕ ausgebildet sind.

11. Wälzschälwerkzeug nach einem der Ansprüche 1 bis 7, **dadurch gekennzeichnet, dass** ein radial nach außen weisendes Schneidende mindestens einer Schneide (14) auf einem anderen Kopfkreisradius als das nach außen weisende Schneidende einer anderen Schneide (14) angeordnet ist.

12. Wälzschälwerkzeug nach Anspruch 11, **dadurch gekennzeichnet, dass** bei einem Nennradius R des Trägerkörpers (12) für einen äußeren Kopfkreisradius Rₐ der einen Schneide (14) und einen inneren Kopfkreisradius Rᵢ der anderen Schneide (14) mit ΔR = (Rₐ-Rᵢ)/2 0,00 < ΔR/R ≤ 0,05, insbesondere 0,001 ≤ ΔR/R ≤ 0,003, vorzugsweise 0,005 ≤ ΔR/R ≤ 0,02 und besonders bevorzugt 0,008 ≤ ΔR/R ≤ 0,01 gilt.

13. Wälzschälwerkzeug nach Anspruch 9, **dadurch gekennzeichnet, dass** für sämtliche in der gemeinsamen Radialebene vorgesehenen Schneiden (14) nur genau ein ΔR/R oder genau zwei verschiedene ΔR/R oder nur genau drei verschiedene ϕ oder nur genau vier verschiedene ΔR/R ausgebildet sind.

14. Verfahren zum spanenden Erzeugen einer Verzahnung eines Zahnrads durch Wälzschälen, bei dem mit Hilfe eines mehrere Schneiden (14) aufweisenden Wälzschälwerkzeugs (10), insbesondere nach einem der Ansprüche 1 bis 13, ein Werkstück (24) am Umfang spanend bearbeitet wird,
wobei während eines bei einem konstanten Achsabstand des Wälzschälwerkzeugs (10) zum Werkstück (24) durchgeführten Bearbeitungsdurchgang bezogen auf einen nach diesem Bearbeitungsdurchgang vorliegenden Zahnzwischenraum im Umfang des Werkstücks (24) mindestens eine Schneide (14) des Wälzschälwerkzeugs (10) in tangentialer Richtung des Zahnzwischenraums und/oder in radialer Richtung des Zahnzwischenraums nur teilweise Material abträgt.

15. Verfahren nach Anspruch 14, bei dem die Schneide (14) in einem Bearbeitungsdurchgang nur an einer Zahnflanke der zwei Zahnflanken des zu erzeugenden Zahnzwischenraums und/oder nur am Zahngrund oder nur beabstandet zum Zahngrund Material aus den zu erzeugenden Zahnzwischenraum abträgt.
